Europäisches Patentamt

European Patent Office

Office européen des brevets

(19)

(11) EP 0 719 005 A2

## (12) EUROPEAN PATENT APPLICATION

(43) Date of publication:
26.06.1996 Bulletin 1996/26

(51) Int Cl.$^6$: H04L 5/06

(21) Application number: 95120116.9

(22) Date of filing: 19.12.1995

(84) Designated Contracting States:
DE FR GB

(30) Priority: 23.12.1994 IT MI942623

(71) Applicant: ITALTEL SOCIETA ITALIANA
TELECOMUNICAZIONI s.p.a.
I-20149 Milano (IT)

(72) Inventor: Michieletto, Giampaolo
IT-30030 Robegano (VE) (IT)

(74) Representative: Giustini, Delio
c/o Italtel Società Italiana
Telecomunicazioni s.p.a.
P.O. Box 10
I-20019 Settimo Milanese (MI) (IT)

### (54) Receiver structure for OFDM

(57) A system and a method for the synthesis of a receiver particularly suitable in transmission systems with orthogonal frequency division multiplexing (OFDM).
The system includes:

- series-parallel conversion means (S/P) suitable to produce $N/2^k$ output flows with a bit rate equal to $2^k$ times the system bit rate (F);

- filter units ($FP(k_i)$), each one receiving as input a corresponding output of the series-parallel conversion means (S/P);

- $2^k$ processors (DFT) whose $N/2^k$ inputs are connected to the outputs of said filter units ($FP(k_i)$);

- modulation means connected to the outputs of said processors (DFT);

- rearrangement and eventually filtering and/or equalization means (Rearrang and Postfiltering) connected to the outputs of said processors (DFT) and to the outputs of said modulation means.

Fig.12

**Description**

Field of the Invention

The present invention relates to telecommunication systems of the type known as OFDM (Orthogonal Frequency Division Multiplexing) or digital data transmission systems with orthogonal frequency division multiplexing, where data arriving from a source is subdivided in a certain number of data sequences which are multiplexed according to a frequency division format. One preferred, but not restrictive application lies in the field of digital television signal transmission by radio as well as by cable.

In systems of the type generically known as muiticarrier or multitone systems, one of the primary objects is to define an optimum compromise between a maximization of the exploitation of the transmission channel bandwidth in order to be able, for example, to transmit as much per time unit as possible (in the range of 30 Mbit/s through a 8 MHz band (channel)), and the requirement to exclude the possibility of data errors caused by channel fading phenomenons, impulsive noise and other typical signal quality degrading phenomenons attributed to variable or predetermined characteristics of the specific transmission channel.

Different solutions for these problems can be compared in terms of computational complexity or operations (complex multiplications) to be carried out per time unit by the different functional units which set up the architecture of the OFDM transmitters, and which influence the complexity and the realization costs of such systems. The computational complexity is therefore a merit figure which refers to the efficiency and/or reliability of assuring a non degraded reception of the digital signals and/or their correct reception also under impairments of the transmission channel.

The principle of OFDM systems is based on the subdivision of the available bandwidth in a plurality of sub-bands (for example in the range of hundreds or thousands), where each sub-band carries a part of the data flow to be transmitted. Each sub-band is modulated by applying a signal which is orthogonal to the modulation signals of the other sub-bands. The channel channel distortion creates interference problems among the bits in a digital transmission. In order to control such interference two alternative approaches are commonly used. The first is to separate the symbols one from the other on a time base considering the fact that the interference due to echo phenomenons has a limited time duration, while a second approach is to operate a signal manipulation by using a filter bank suitable to reconstruct through a pulse shaping operation information degraded by the channel. The first filterless approach implies the use of less complex hardware for the absence of the relative filters, but it obviously limits the exploitation of the available transmission channel bandwidth thus limiting the transmission efficiency (bit/s/hertz).

In both types of systems OFDM-PS and OFDM-NPS (where the suffix indicates in the first case a system with Pulse Shaping and in the second case a system with no Pulse Shaping) it is anyhow necessary in practice to implement in the receivers also an equalization stage to correct the degradation of the signal due to linear distortions. The equalization may be introduced alternatively either before the OFDM demodulator, i.e. working on the baseband signal, or after the OFDM demodulator at a much lower symbol rate. Although the second solution entails the realization of a number of equalization units which is at least the same number as that of the sub-bands, this solution is generally preferred compared to the difficulty to realize an equalization unit operating at a high symbol rate as required by the first solution.

While in a system with pulse shaping (OFDM-PS) the equalization can be limited to the time domain (distortion due to interference phenomenons between following bits) being the distortion effects in the frequency domain (distortion due to cross-talk phenomenons among adjacent or neighbour subchannels) cancelled by the spectral definition of the pulses and by the peculiar orthogonality of the modulation signals, in the case of systems without pulse shaping (OFDM-NPS) the equalization may be limited to the multiplication for a constant. This happens in consideration of the fact that the effects of the distortion in time domain is cancelled by effect of the guard interval, introduced on purpose on the time domain, at least until the used guard interval remains longer than the more persistent echo introduced by the channel [2].

However also in the OFDM-NPS systems, even if it is theoretically possible to use the technique of introducing a guard interval between symbols in time base to make the equalization trivial, in the specific case of single frequency network (SFN) the use of the data symbol separation technique with guard interval would imply the use of an extremely big and complex discrete Fourier transform block, practically difficult to be implemented at the present state of the art due to synchronization problems still to be solved, or in any case requiring a very complex and expensive hardware. Therefore the equalization is often necessary also in OFDM-NPS systems [3].

It is known and proved [2] that carrying out an equalization procedure at a rate which is multiple compared to the symbol frequency, in other words with a fractional sampling period compared to the sampling period of the transmission system, can give better results than conventional symbol rate equalization.

On the other hand the architecture of a multicarrier OFDM modemodulator device is conventionally considered to be implementable by a relatively simple hardware, only if this responds to certain precise requirements of a so-called Complex Standard Scheme (SCS), and precisely:

C1) the output bit rate $F_0$ has to be exactly N times the input bit rate, where N is the number of branches or sub-bands of the modemodulator device, and therefore the spacing in input time base T turns out to be N times the spacing in output time base $T_0$, being

$$F_0 = NF \qquad T = NT_0;$$

C2) the filters of all sub-bands have to be identical: $G_n(t_0) = h(t_0)$, where: n=0,1,...,N-1;

C3) the carrier frequencies have to be spaced out by a same interval F with respect to the baseband with high bit rate $(0,F_0)$, i.e. $f_n = nF$, where n=0, 1, ..., N-1.

If the system satisfies the conditions C1), C2) and C3), an SCS with N subchannels is completely specified by the input bit rate F and by the filter $h(t_0)$, commonly called "reference filter".

The common thesis in the practical realization of these systems is in fact that an SCS can be realized in an efficient way using:

- a processor with N points (or with the dimension N) which computes the inverse discrete Fourier transform (N-size IDFT) in the case of a transmitter, and the discrete Fourier transform (N-size DFT) in case of a receiver;
- a polyphase network with N branches (N-branch PPN);
- a parallel/serial (P/S) converter in case of a transmitter or serial/parallel (S/P) in case of a receiver. The polyphase network may be visualized as a bank or array of filters sampled at the symbol rate.

## Background Art

A system of this type is for example described in the patent US-A-4,300,229 in the name of B. Hirosaki.

An improved elaboration of this type of systems suitable to achieve substantially a halving of the computational complexity of the system or, alternatively, to allow the transmission of a double number of channels with the same complexity of the circuit units is disclosed in EP 668678 in the name of the same applicant. The relevant description and the relative illustrations of this previous application are adduced hereafter for explicit reference.

In some OFDM-PS systems (with pulse shaping) of the known type the structure $SCS_R$ of the receiver produces directly signals with a double bit rate [1]. The post-processing circuit unit of these receivers which commonly follows in cascade the unit $SCS_R$ could in fact be modified in such a way to produce fractioned output flows (with double sampling frequency) to be transmitted to the inputs of the equalizer. However, in more general terms, either the post-processing unit of output flows produced by the $SCS_R$ of the receiver cannot be modified for other reasons, or in many cases this unit does not exist. This is for example the case of the conventional systems of the filterless type (i.e. without pulse shaping), in which the unit $SCS_R$ of the receiver produces output signals at the symbol rate. In all these cases the problem of synthesizing a receiver unit $SCS_R$ with fractionally spaced outputs remains unsolved.

In other words, at the present state of art there are the problems to conciliate the need of using an equalizer advantageously operating with a multiple sampling rate compared to the system symbol rate thus to increase the recovery capacity of the signal quality even if there are strong linear channel distortions, with the need to maintain in acceptable terms the consequent increase in the complexity and therefore guarantee the practical realizability of the OFDM receiver demodulator suitable to produce output flows with said multiple sampling rate, and therefore suitable to ber followed by multiple sampling rate equalizers.

## Object of the Invention

It is therefore a primary object of the present invention to supply an OFDM demodulation method and system suitable to produce a plurality of frequency multiplexed signals with a multiple symbol rate compared to the system symbol rate, or a fractionized sampling period satisfying moreover the criterions of a Standard Complex Scheme (SCS) and which is therefore realizable by units which can be implemented efficiently.

This object is completely achieved by the present invention.

## Disclosure of the Invention

Fundamentally the method of the invention consists in splitting up a conventional SCS structure with N subchannels (or sub-bands), virtually in a number $2k$ of SCS structures, each one with $N/2^k$ output flows with a rate which is $2^k$ times the symbol rate. This first step of the synthesis procedure of the invention consists in the hypothesis of the use of a plurality of first identical sections $(K(f))$ of an identical generic subchannel decimation filter $(H(f))$ sampled at said rate $2^k$ higher than the symbol rate. The output flows from said first filter $(K(f))$ sections may therefore be arranged in a number $2^k$ of groups, each one with $N/2^k$ flows, a first group being composed by the output flows of all said first filter (K(f)) sections with a zero frequency offset, and therefore intrinsically in conformity with a SCS scheme, while each one of the other groups are set up by the $N/2^k$ output flows of all said first filter (K(f)) sections having a same frequency offset compared to a said first group of output flows in conformity with the definition conditions of an SCS. Modulating the output flows of said other groups with a frequency corresponding to the respective frequency offset of the group, it is possible to reset a <u>per group conformity</u> to a SCS scheme substantially of all N output flows with a rate $2^k$ higher than the symbol rate. In practice, $2^k$ separate SCS structures are thus defined, each one with $N/2^k$ subchannels, and all with a rate $2^k$ higher than the symbol rate of the system.

At the receiver the reciprocal scheme is used, and after the $2^k$ $SCS_s$ the N flows are rearranged in such a way to reset their coherence, in practice eliminating the arrangement in groups previously operated, and the N output flows of the $N/2^k$ distinct SCS are filtered with a number N of second identical sections (F(f)) of said generic subchannel decimation filter (H(f)), essentially <u>not sampled</u>, and such to produce jointly at the respective first filter section (K(f)) the decimation filter function (H(f))=K(f)F(f) with an output flow at the same bit rate of the input flow, satisfying also in this post-filtering step the needs of a SCS scheme.

Having in this way defined said plurality of SCS units, each one of $N/2^k$ branches or subchannels, it is possible to realize each one of these SCSs according to a so-called "efficient implementation" using for each SCS unit with $N/2^k$ branches a polyphase network with $N/2^k$ branches ($N/2^k$-branch PPN), a processor (DFT) with $N/2^k$ points suitable to compute the discrete Fourier transform, and compensating the offset in frequency of the $N/2^k$ output flows of the processors DFT relative to said other groups, modulating the output signals with a frequency corresponding to the group offset. The N flows with a sampling rate $2^k$ higher than the symbol rate of the system are therefore simply rearranged, in case of filterless systems (without pulse shaping), and possibly filtered by filters essentially <u>not sampled</u>, in case of systems with pulse shaping.

In this way, N data flows are obtained with a fractioned symbol spacing in time base, and therefore manageable by an equalization or equalizer filter array advantageously operating with a sampling rate equal to $2^k$ times the symbol rate of the system. This important result is obtained by a moderate increase of the complexity of the units composing the OFDM demodulator, as illustrated hereafter in the description. The architecture of the OFDM demodulator is moreover suitable for a simplified realization of the polyphase network through merging in single identical complex units of a number $N/2^k$ of the original N units of said poliphase network, in turn derived from the transfer function of said first filter sections of the conventional scheme (inefficient) of the relative SCS, according to a whatsoever form of splitting up of the "reference" filter, thus obtaining a further simplification of the hardware, as will be illustrated hereafter.

The system of the invention can be applied to different known schemes, as to the so-called full complex scheme, where the structure is doubled for the real part and for the imaginary part of a certain transmission signal, and, as aforesaid, in case of a system which applies the pulse shaping technique as well as in case of a so-called filterless system which does not apply the pulse shaping technique.

The number $2^k$ of splitting of the output flow sampling period of the demodulator to be equalized, and therefore of the number in which the conventional original structure SCS of the demodulator will be virtually subdivided, will depend on the cost/benefit considerations based on an optimum relation between complexity and total number of the necessary devices.

In general terms, a demodulation and equalization system according to the present invention may be defined as a structure which includes:

$2^k$ serial/parellel conversion devices suitable to receive as input a baseband reception signal and to produce $2^k$ groups of $N/2^k$ output flows with a bit rate equal to $2^k$ times the symbol rate F of the system, where k is a whole number;

units of a polyphase network with $N/2^k$ branches sampled to said multiple rate, each one of those is suitable to receive as input one of said output flows of said serial/parallel conversion devices, and to produce through $N/2^k$ outputs the same number of output flows;

$2^k$ processors working at said multiple sampling rate, each one of the dimension $N/2^k$, the $N/2^k$ inputs of which are respectively connected to the outputs of said first units, each one suitable to compute a discrete Fourier transform and to produce $N/2^k$ output flows;

modulation devices connected to the outputs of said processors suitable to remove the respective frequency offset to reset in conformity with a SCS scheme of all output flows of said $2^k$ processors;

equalization means with N branches working at said multiple $2^k F$ sampling rate with N inputs connected respectively to said N output flows to said multiple rate of said modulators.

<u>Brief Description of the Drawings</u>

The features of the present invention which are believed to be novel are set forth with particularity in the appended claims. The invention, together with further objects and advantages thereof, may be understood with reference to the following description, taken in conjunction with the accompanying drawings and in which:

Figure 1 is a general scheme of a multicarrier OFDM transmission-reception system;
Figure 2 is a multicarrier transmission-reception scheme according to a standard complex scheme;
Figures 3 and 4 illustrate the synthesis of a SCS for the transmitter and for the receiver, respectively;
Figure 5 shows a splitting-up process, according to the invention, of the reference filters of a SCS into two parts;
Figure 6 illustrates a rearrangement of different paths after the filters splitting into two separate parts;
Figure 7 schematizes the definition of two virtual schemes SCS after the splitting-up of the filters, the rearrangement and the modulation of the various signals;
Figures 8, 9, 10 and 11 illustrate the efficient implementation procedure of the distinct SCSs in order to reduce the circuit complexity;
Figure 12 shows a receiver with efficient realization for a system with N subchannels with fractionally spaced outputs according to the present invention;
Figure 13 is a scheme of the complex units which set up the polyphase network of the receiver of Fig. 12;
Figure 14 is a general scheme of a transmission-reception system, using an equalizer in the receiver;
Figure 15 shows three different decomposition alternatives of the reference filter of the original SCS;
Figures 16, 17, 18, 19 and 20 illustrate the synthesis processing of a receiver with fractionally spaced outputs, according to the present invention and according to a Full Complex Scheme;
Figures 21, 22 and 23 illustrate the synthesis procedure of a receiver with fractionally spaced outputs for a filterless system, i.e. without pulse shaping;
Figure 24 is a scheme of an OFDM receiver with efficient realization, with sixteen outputs with a fractioned sampling rate which is four times higher than the symbol bit rate of the system.

Detailed Description of a Preferred Embodiment

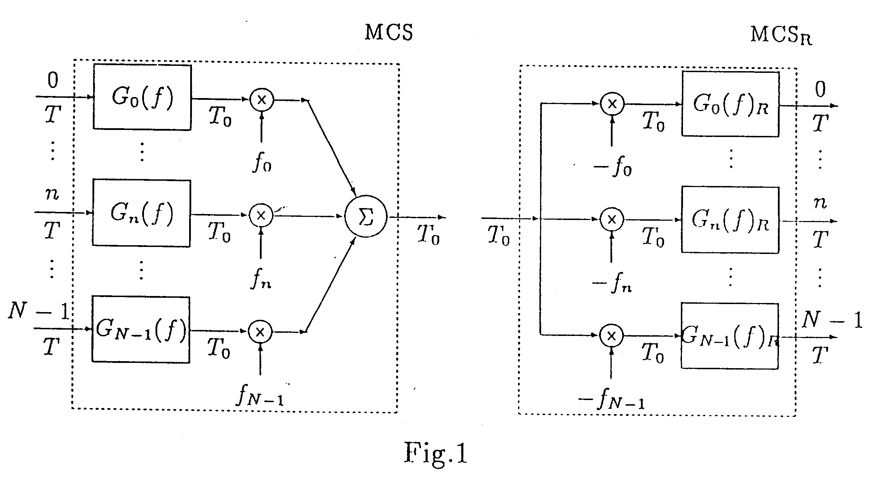

The scheme of a multicarrier system (MCS) with N branches or subchannels is illustrated in Fig. 1. The transmitter has an input sampling frequency $F=1/T$ and an output sampling frequency $F_o=1/T_o$. The N blocks $G_n(f)$ represent as many interpolator filters, and the N flows are modulated at the corresponding N carrier frequencies: $f_0, f_1, ..., f_{N-1}$.

The receiver ($MCS_R$) has a scheme which is dual with respect to the scheme of the transmitter. From the receiver the respective carrier frequencies are subtracted during the respective modulation stages, and the blocks $G_n(f)R$ represent the same number of decimation filters. In practice, the receiver is essentially specified by the parameters of the relative transmitter. The transmitter MCS and the receiver $MCS_R$ represent the fundamental scheme of an OFDM system neglecting minor accessory operations which involve anyhow an additional negligible computation complexity.

It is proved that an MCS unit cannot be implemented in an efficient way, that is in an economically feasible way, if it does not satisfy certain conditions specified by the definition of a so-called Standard Complex Scheme (SCS), as already indicated before.

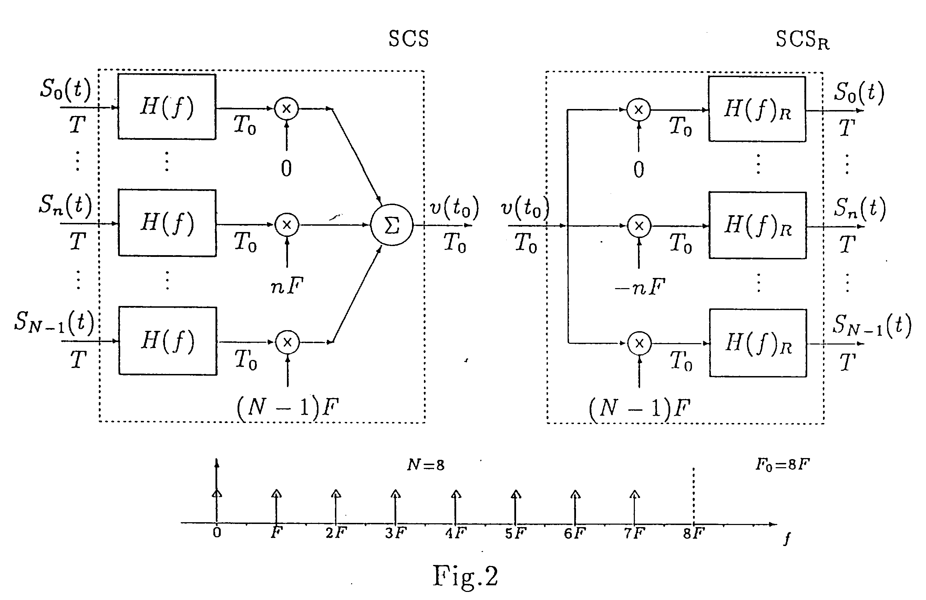

As shown by the diagram associated to the example schemes of the respective SCS units (of a transmitter) and $SCS_R$ (of a receiver) of Fig. 2, the SCS scheme provides, for a number $N=8$ of subchannels, for an output sampling frequency $F_0$ which is exactly eight times the input sampling frequency F. Therefore the input timebase spacing T is N times the output spacing in timebase $T_0$ (referring to the case of the SCS of the transmitter).

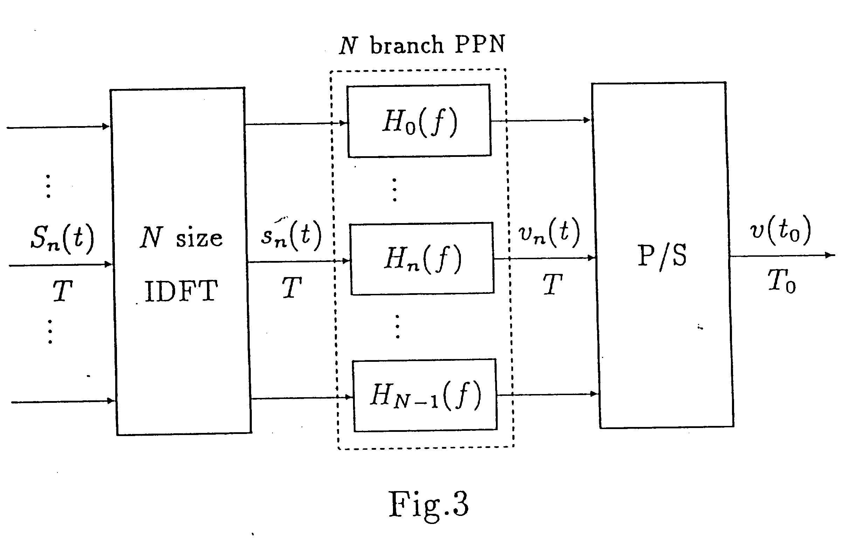

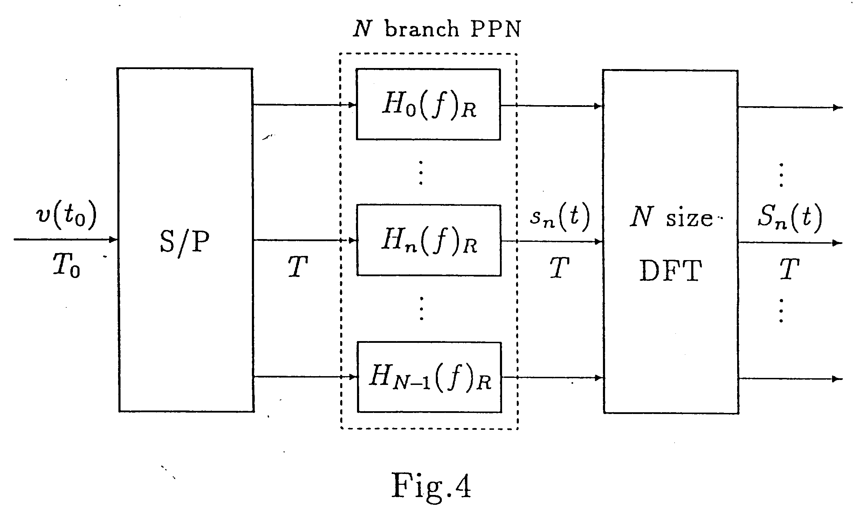

Once satisfied the conditions defining an SCS, it is shown that the scheme of an SCS (transmitter) may be synthesized in the way illustrated in Fig. 3, and analogously an $SCS_R$ (receiver) may be synthesized in the way illustrated in Fig. 4.

An SCS of the dimension N, with an input bit rate F and a reference filter $h(t_0)$, may be synthesized as follows:

1) use a processor with N points to carry out the inverted discrete Fourier transform (IDFT), to process the input vector $[S_0(t), ..., S_{N-1}(t)]$ in the vector $[s_0(t), ..., s_{N-1}(t)]$ for each instant $t=kT$, where k is a whole number, according to the expression:

$$s_n(t) = \sum_{m=0}^{N-1} S_m(t) W_N^{mn} \qquad (1)$$

$$\text{where: } W_N^K = e^{\left(\frac{i2\pi k}{N}\right)}$$

2) use a polyphase network with N branches (PPN) to filter the signals $[s_0(t), ..., s_{N-1}(t)]$ according to $v_n(t)=h_n*s_n(t)$;
3) carry out a parallel/serial conversion of the N signals $v_n(t)$ in a high frequency signal $v(t_0)$ according to the rule $v(t+nT_0)=v_n(t)$.

The filters of the polyphase network are correlated to the reference filter of the SCS as follows:

$h_n(t)$ are a serial/parallel conversion of the response to the pulse of reference filter $h(t_0)$, in other terms:

$$h_n(t) = h(t+nT_0).$$

As already said the synthesis of an $SCS_R$ for the receiver turns out to be already defined by the parameters elaborated for the SCS transmitter, inverting the relative position of the converter which will be of the serial/parallel type, and of the processor with N points which will carry out the discrete Fourier transform (DFT).

The method of the invention to synthesize a demodulator with fractionally spaced outputs, that is with output flows having a subdivided symbol period (with respect to the base symbol period of the transmission system), is based on a splitting-up of the SCS structure of the demodulator in a number of SCS structures. For illustration conveniences the method of the invention is illustrated with reference to an SCS transmitter unit, taking into consideration the fact that the result of a splitting-up and synthesis operated for the transmitter is realizable in a specular way in the receiver.

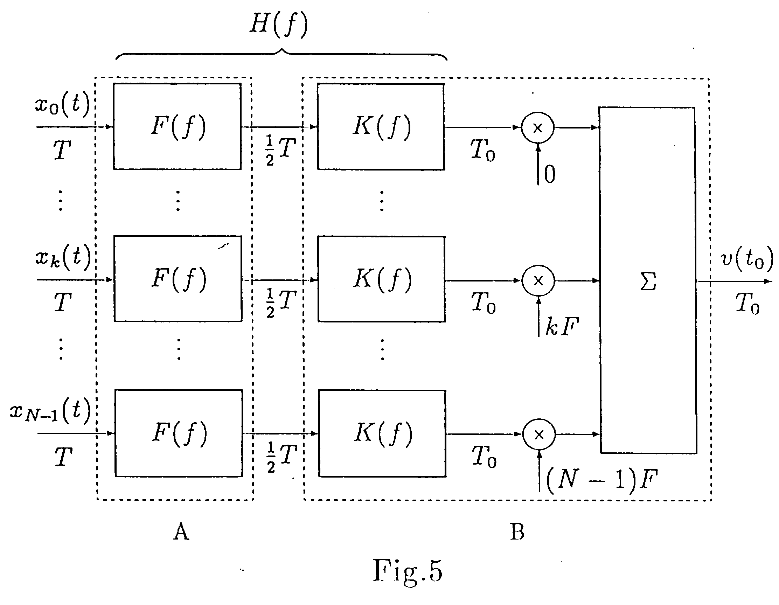

Taking into consideration an SCS base structure as that of the transmitter part of the OFDM system of Fig. 2, where the reference filter is H(f), the input and output sampling frequencies $F = 1/T$ and $F_0 = 1/T_0$, respectively, let us for the moment split up the unit SCS in two parts A and B as illustrated in Fig. 5, where the intermediary sampling frequency will be $2F = 2/T$. To this aim, each interpolator filter H(f) may be subdivided in two parts F(f) and K(f), where F(f) is an interpolator filter with an input frequency F and an output frequency 2F (interpolation of a factor 2), and the filter K(f) is an interpolator filter with an input frequency 2F and an output frequency $F_0$ (interpolation of a factor N/2). This splitting-up is not a unique one, but it can be carried out in different ways as will be described hereafter. For the moment, let us suppose that both filters F(f) and K(f) are defined. Clearly, both subunits A and B, into which the original SCS structure has been split, do no more satisfy the needs of an SCS scheme, and therefore they cannot be implemented in an efficient way.

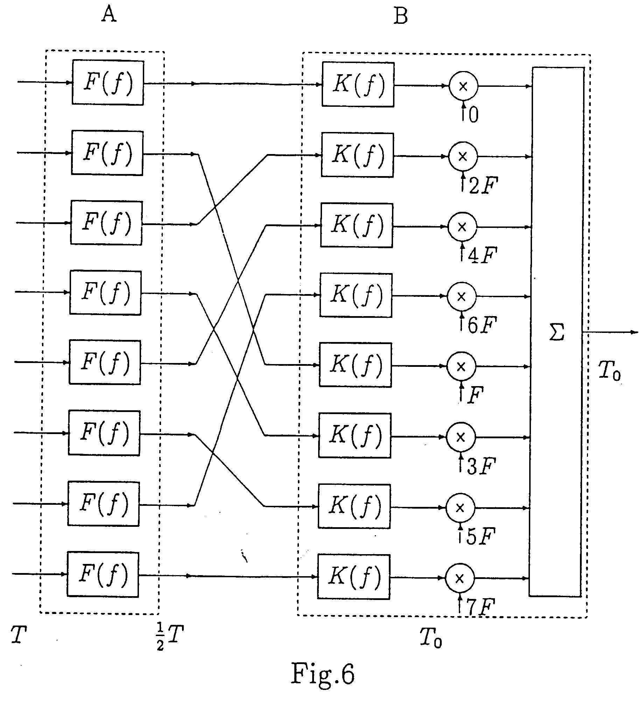

Fig. 6 shows the decomposition scheme into two parts A and B for an original SCS having a number N=8 branches or subchannels according to a splitting scheme similar to that shown in Fig. 5. If we arrange the N output flows of the filters F(f) (unit A) in two groups of subchannels to be identified as even and odd as illustrated in the scheme of Fig. 6, the upper half of unit B, which contains the filters K(f) and the modulators, turns out to satisfy the needs of an SCS scheme with parameters K(f), 2F, N/2, whereas the lower half of unit B does not satisfy the needs of an SCS unit due to the presence of a spurious frequency offset of the modulators equal to F.

Focusing the attention on unit B and neglecting for a moment unit A, it is possible to compensate this offset by premodulating the respective flows before the filters with a frequency equal to the offset F, substituting the filters K(f) with filters given by

$$K'(f) = K(f-F) \qquad (2)$$

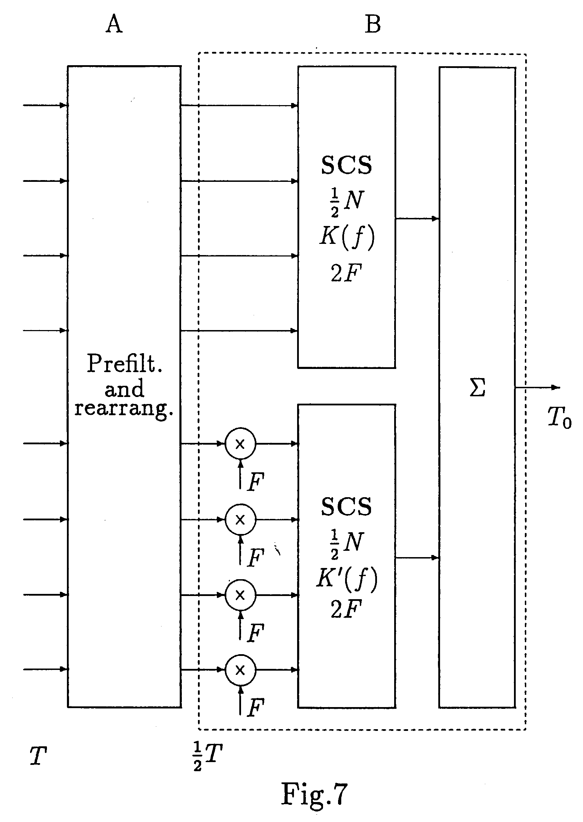

This results in a scheme like the one shown in Fig. 7, where unit B turns out to be virtually split in two SCSs: the upper one with parameters K(f), 2F, N/2 and the lower one with parameters K'(f), 2F, N/2.

In fact the new modulation carried out before the filters takes place at a frequency 2F and corresponds therefore in the time domain to a multiplication by $(-1)^n$ where n is the running time. An array of multipliers of this type by $(-1)^n$ has clearly no computational complexity.

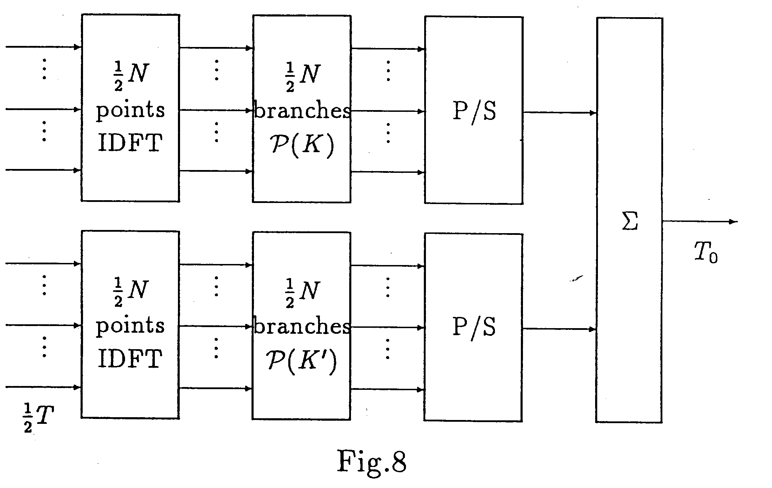

Now the two distinct SCSs are suitable for an efficient implementation as shown in a schematic way by Fig. 8.

At this point a practical synthesis of the OFDM modulator turns out to be particularly efficient, despite the fact that it is relatively heavier than that of a modulator according to the original SCS scheme (unfractioned). In fact the computational complexity of two SCSs with N/2 branches, realized using the respective processors (I)DFT and polyphase networks PPN, turns out to be higher than -the complexity of a single SCS with N branches. However, the complexity may be significantly reduced in virtue of the fact that the reference filters of the two distinct SCSs, in which the original unitary structure SCS is subdivided, are <u>tightly correlated</u> according to the relation (2). It is therefore possible to merge some filtering operations which are similar in two distinct SCSs.

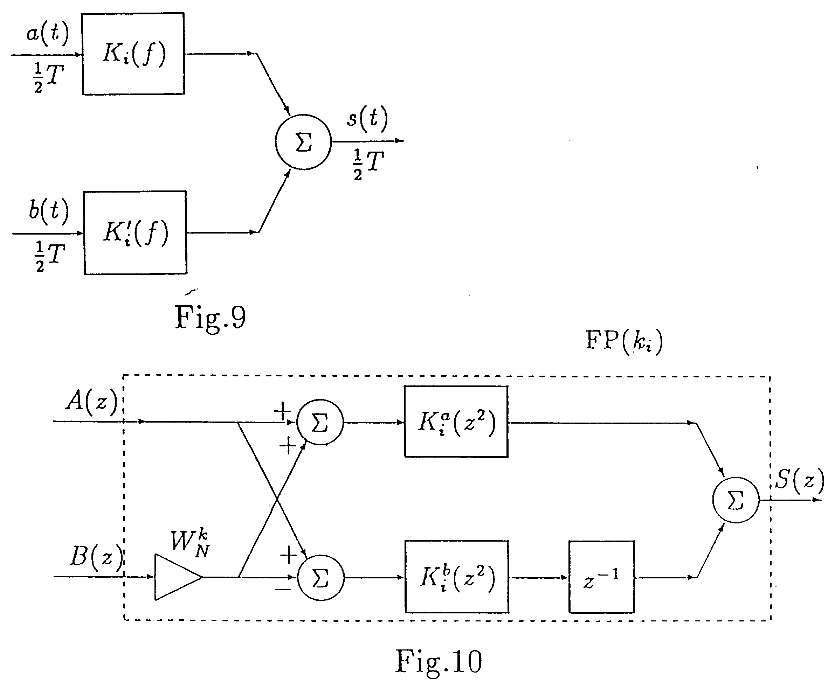

Analyzing the efficient realization of both SCSs of Fig. 8, the summing of the signals may be transferred before the parallel/serial conversion, so that each input of the converter P/S assumes a scheme like the one shown in Fig. 9, where $k_i(t)$ and $k'_i(t)$ represent the poliphase components of the filters $k(t_0)$ and $k'(t_0)$.

The relations being:

$$K'(f) = K(f-F) \qquad (3)$$

$$k'(nT_0) = k(nT_0)\, e^{j2\pi FnT_0} = k(nT_0)\, e^{j2\pi \frac{n}{N}}$$

Then, the PPN decomposition yields:

$$k_i(n\tfrac{1}{2}T) = k(T_0(i+n\tfrac{1}{2}N))$$

$$k_i'(n\tfrac{1}{2}T) = k'(T_0(i+n\tfrac{1}{2}N)) = k_i(n\tfrac{1}{2}T)(-1)^n W_N^i \tag{4}$$

$$i = 0, \ldots, \tfrac{1}{2}N\text{-}1$$

With the notations indicated in Fig. 9 and employing the formula (4), it is possible to write the following z-transform relation:

$$S(z) = A(z)K_i(z) + B(z) K_i'(z) \tag{5}$$

Let us decompose the terms $K_i(z)$ in terms with even index and odd index coefficient of the filter, it is possible to write:

$$K_i(z) = K_i^a\!\left(z^2\right) + z^{-1}K_i^b\!\left(z^2\right) \tag{6}$$

and to define $b'(n) = W_N^i \cdot b(n)$
In virtue of the relations (4) we get:

$$K_i'(z) = W_N^i K_i(-z) \tag{7}$$

and replacing (6) and (7) in (5) we obtain:

$$S(z) = [A(z) + B'(z)]\,K_i^a\!\left(z^2\right) + z^{-1}[A(z) - B'(z)]\,K_i^b\!\left(z^2\right) \tag{8}$$

The interpretation of the equation (8) results in the definition of the scheme of a unit $FP(k_i)$ with a structure shown in Fig. 10, in which the unit $W_N^k$ represents a multiplier by a constant, and the unit $z^{-1}$ represents a sample delay unit.

In this way the complexity of two distinct polyphase networks can be practically halved.

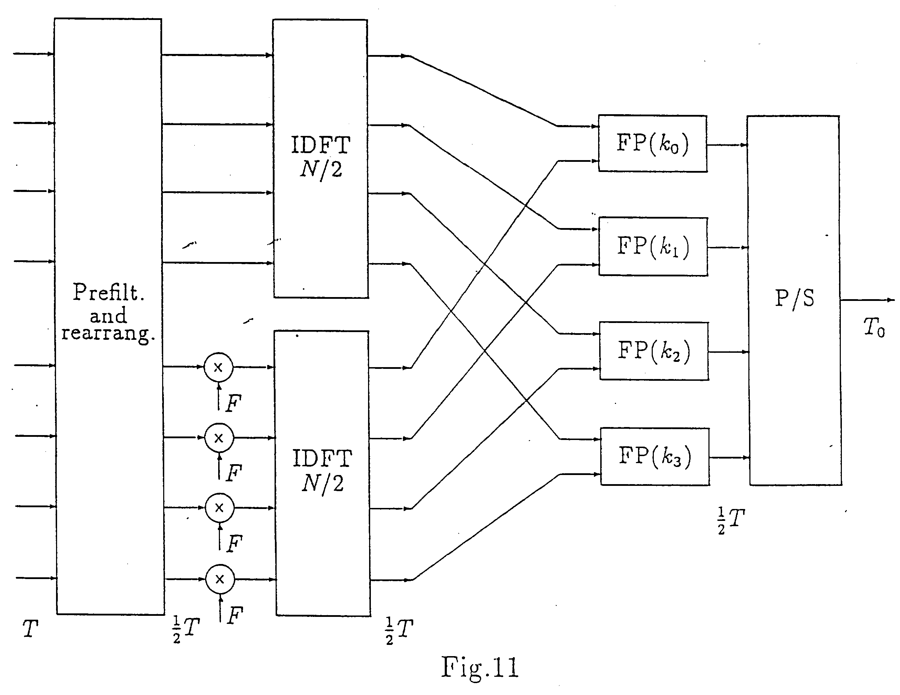

This simplification results in the complete block scheme shown in Fig. 11 which, as said before, has been synthesized as a SCS transmitter for convenience.

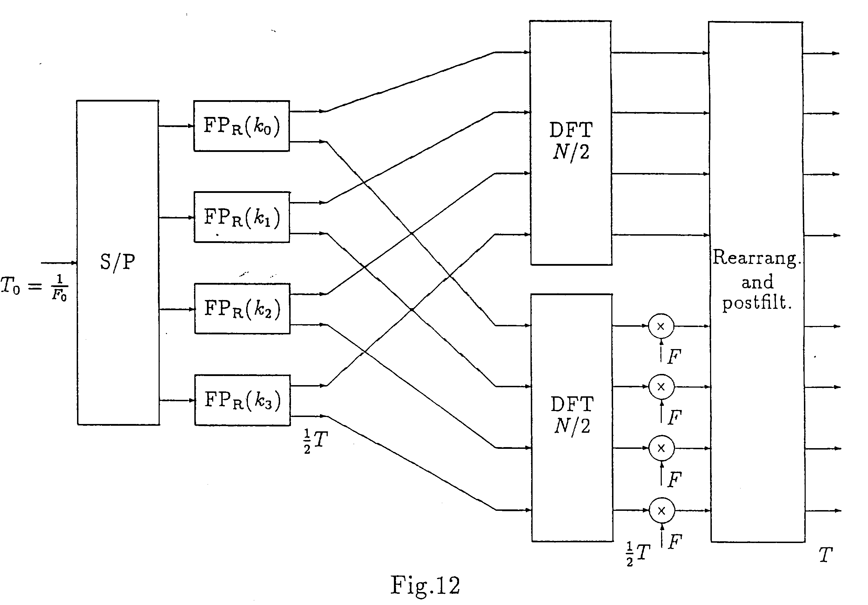

Naturally these manipulations have no importance for the transmitter of an OFDM system, but for a receiver. In virtue of the specular relation between transmitter and receiver, a final demodulator block scheme for OFDM receivers with eight subchannels with fractionally spaced outputs according to the present invention is shown in Fig. 12.

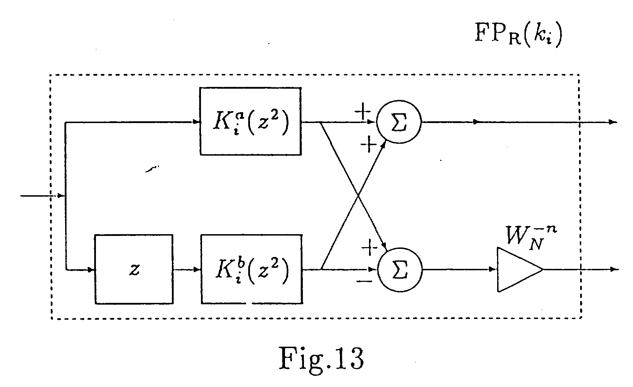

Naturally, as shown in Fig. 13, the units $FP_R(k_i)$ are essentially identical with the units $FP(k_i)$ defined for the hypothetical case of a transmitter with the only difference that the unit $z$ introduces the anticipation of a sample and $W_N^{-n}$ represents the multiplication by a constant. The multiplication by constant carried out by the unit $W_N^{-n}$ represents, in the frequency domain, a modulation with a certain frequency, and carrying out the arrangement of the flows in groups at the inputs of the respective DFT processors, the relative units $W_N^{-n}$ may be transferred after the respective DFT processor.

The rearrangement of the N output flows and the possible filtering carried out in the unit Rearr&postfilter restores the coherence to the original arrangement of the eight output flows from the units $FP_R(k_i)$, and realizes a possible filtering by means of a bank of ordinary filters, not sampled, in substitution of the sampled filters F(f) of unit A defined by the splitting-up of the original SCS unit according to the schemes of Fig. 5 and 6.

As final result we get an OFDM demodulator structures with efficient implementation which produces N output signals with a halved sampling period.

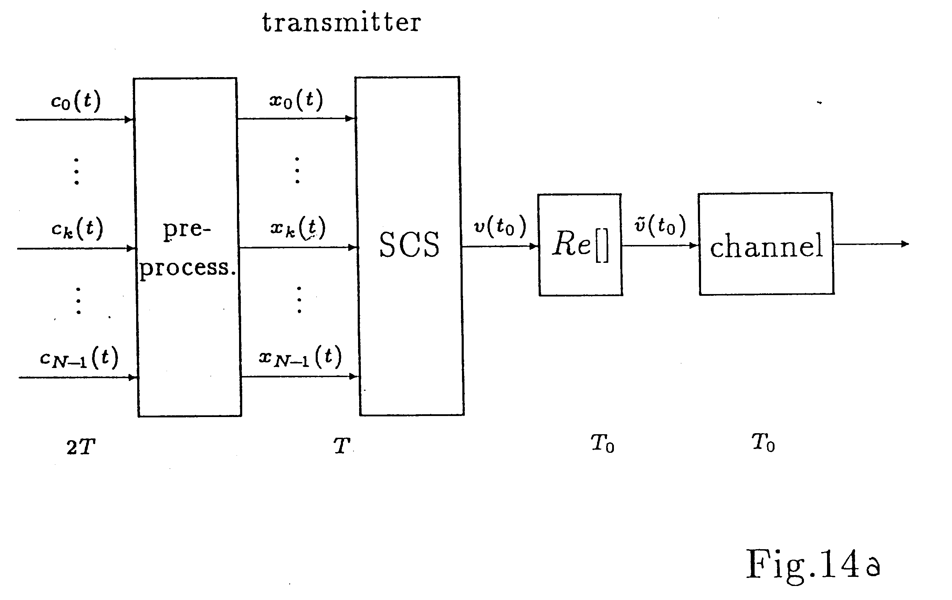

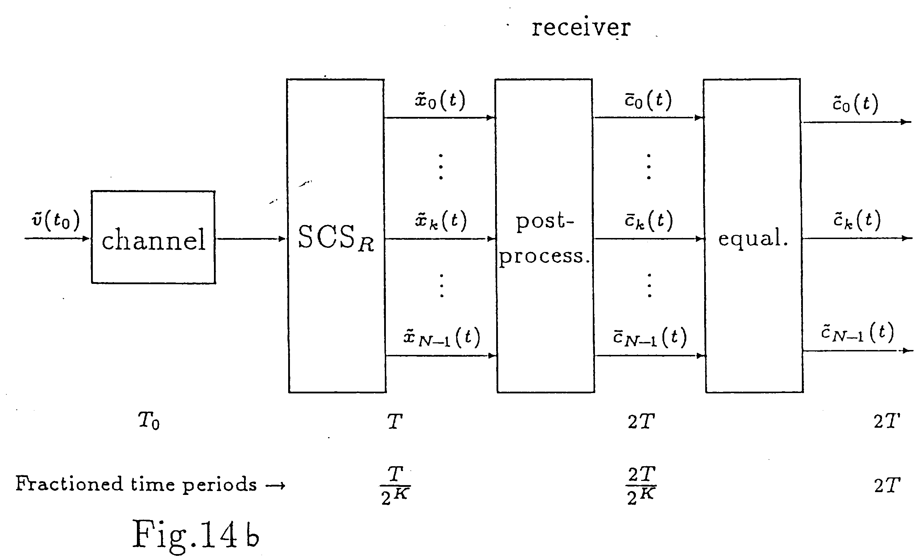

With reference to a generic OFDM system scheme shown in Fig. 14 the structure of the receiver provides for the presence of a post-process unit for the N flows before the equalization unit. Modifying the structure $SCS_R$ of the demodulator according to the invention, it is necessary to modify the post-process unit in order to work at the multiple rate of the output flows of the demodulator. The functions normally carried out in the modified post-process unit will depend on the particular scheme of the demodulator, but these may essentially consist in one or more of the following functions: rearrangement of the flows, modulation, conjugation, extraction of the real part, multiplication by one complex constant and delay of $T/2^k$ according to the common processing techniques used in these systems. The major part of the components do not require modifications if designated to work also at the multiple rate of the flows, with the exception of the modulators which, in function of the frequency increase, will have to be replaced by suitable modulators.

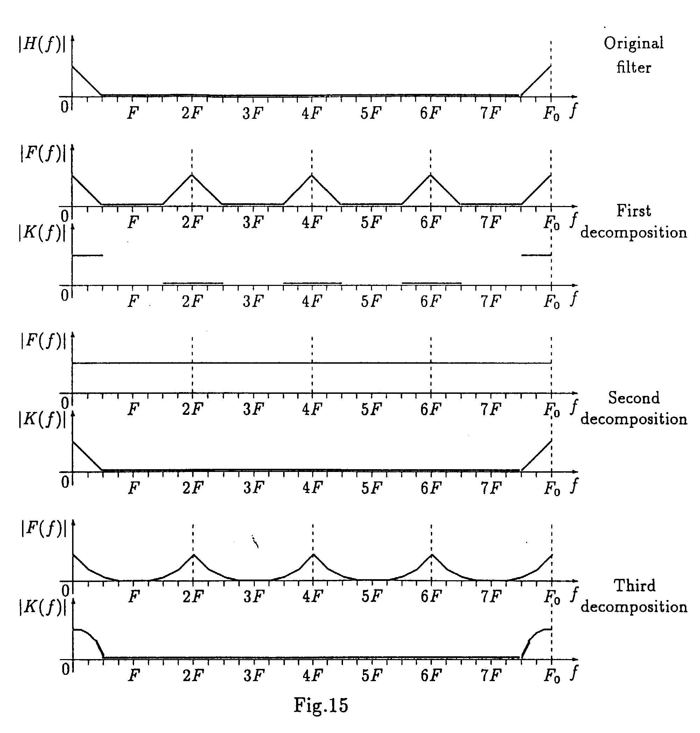

Returning for the moment to the decomposition scheme H(f)=F(f)·K(f) of the Fig. 5 and 6, it is evident that the decomposition is not unique. The diagrams of Fig. 15 show in an exemplifying way the needs in domain of frequency of the filters K(f) and F(f) for three distinct decomposition cases of the reference filter H(f) of the original SCS.

In the case of an OFDM-PS system, analysing the problem in z-domain (time), the filters F(z) perform a preliminary (or completion in the case of a receiver) shaping of the pulse which is therefore completed (or preliminarily carried out in the case of a receiver) by the filter K(z). The first decomposition case illustrated in Fig. 15 concerns a sampling system in which f(t) is the sampled version of the filter h(t); it is possible to demonstrate that the filter K(z) may be defined by the polynominal ratio (according to the notation of z-transform):

$$K(z) = \frac{H(z)}{F(z_1)}$$

where $z_1 = z^{N/2}$

In this particular case the problem is that $H(z)$ is in general not exactly divisible by $F(z_1)$, so that the filter $K(z)$ has an IIR format, and therefore an approximation is necessary to obtain again a FIR format of the filter. This first type of decomposition may be considered as a combination of a shaping carried out exclusively by the filter $F(z_1)$ and of a cancellation of the undesired periodical repetitions made by the filter $K(z)$.

The second splitting case by pure interpolation may be realized by a filter $F(z_1)=F_0$, i.e. by a pure interpolator, and all computational complexity is shifted to the filter $H(z)$.

In a third possible case of the intermediate type, the shaping function is distributed on both filters $F(z_1)$ and $K(z)$. In this case the problem of the decomposition of the filter $H(z)$ can be considered as a problem of approximating the function $H(z)$ by the product $K(z)F(z_1)$. A possible solution of this problem is to consider a multirate decomposition of $H(z)$:

$$H(z) = \sum_{k=0}^{Q} L_k(z^{2^k}) = L_0(z)L_1(z^2)L_2(z^4)...L_Q(z^{2^Q})$$

where $Q = \log_2 N - 1$.

The decomposition can only be realized with a certain degree of precision (based on the frequency domain requirements), but there is a processing method which is suitable to define immediately the filters $K(z)$ and $F(z_1)$ as:

$$K(z) = L_0(z) L_1(z^2)...L_{Q-1}(z^{2^{Q-1}}), \qquad F(z_1) = L_Q(z^{2^Q})$$

For instance, given a filter for N=512 with coefficient number of the filter $H(f)$, $M_H$=4096 (P = 8 taps per subchannel), it is possible to obtain a decomposition with the same frequency characteristics of the filter $H(f)$ employing a filter $K(z)$ with 1473 taps and a filter $F(z_1)$ with 13 taps.

Application of the invention to a full complex scheme

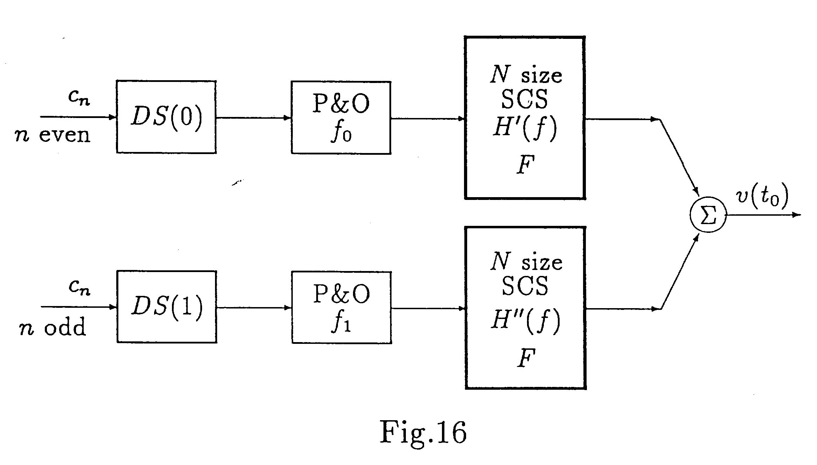

Referring again to a transmitter for convenience reasons, an OFDM transmitter can be implemented according to a scheme which carries out a final extraction of the real part of a signal [1]. This operation implies that the computations carried out on the transmitter are redundant as the imaginary part of the generated signal is discarded. The synthesis of an OFDM architecture suitable to manage a complex signal so that a double number of subchannels can be modulated with the same computional complexity of the modulator described in the publication [1], obtaining in this way full efficiency, is the subject of the mentioned previous patent EP 668678 and published in the report [4] recently presented at the convention GLOBECOM 94. Fig. 16 shows a basic block scheme of the transmitter part of an OFDM system with Full Complex Scheme according [1] and [4], which content has been incorporated here for explicit reference.

Applying the theorem of an efficient implementation and applying the structure division process according to the method of the present invention with the aim of achieving the definition of a demodulator with fractionally spaced outputs for the receiver part, the following condition has to be satisfied:

$$H'(f) = H''(f-F)$$

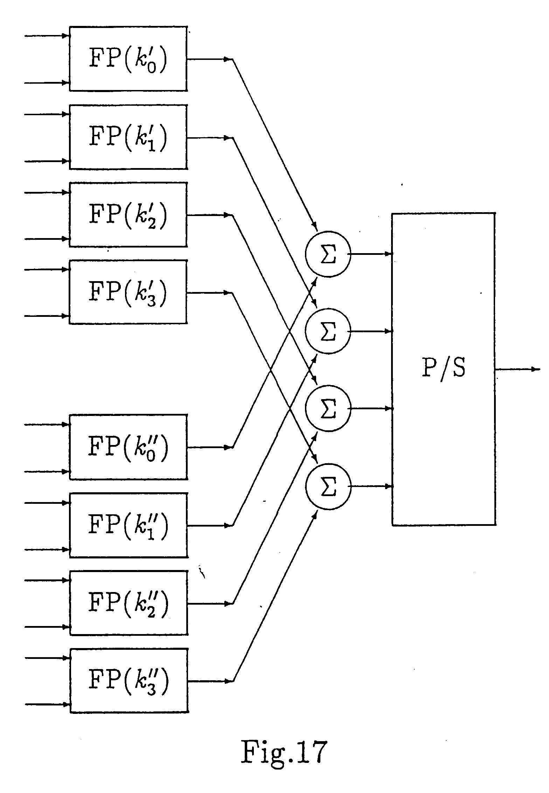

Through the necessary processing the structure of Fig. 16 can be converted in a structure similar to the one shown in Fig. 17 in which the two polyphase networks are pointed out, a first one determined by the efficient implementation of the Fully Complex Scheme according to what described in [1] and [4], while the other polyphase network results from an efficient implementation process of the fractioning of the two original SCSs, according to the method of the present invention.

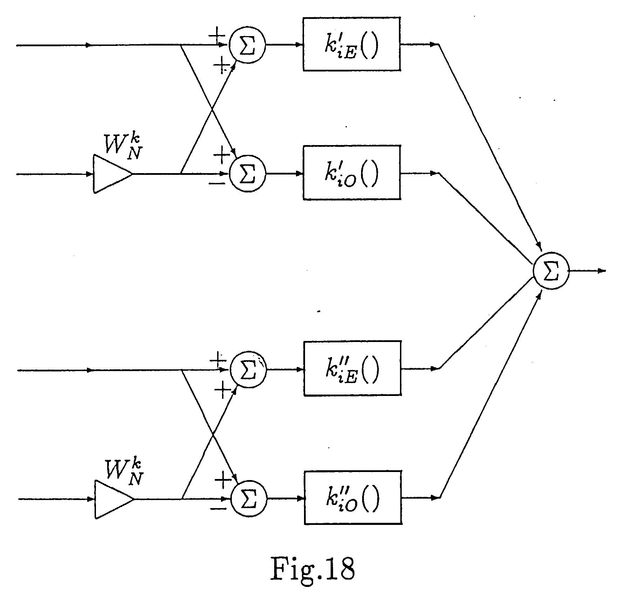

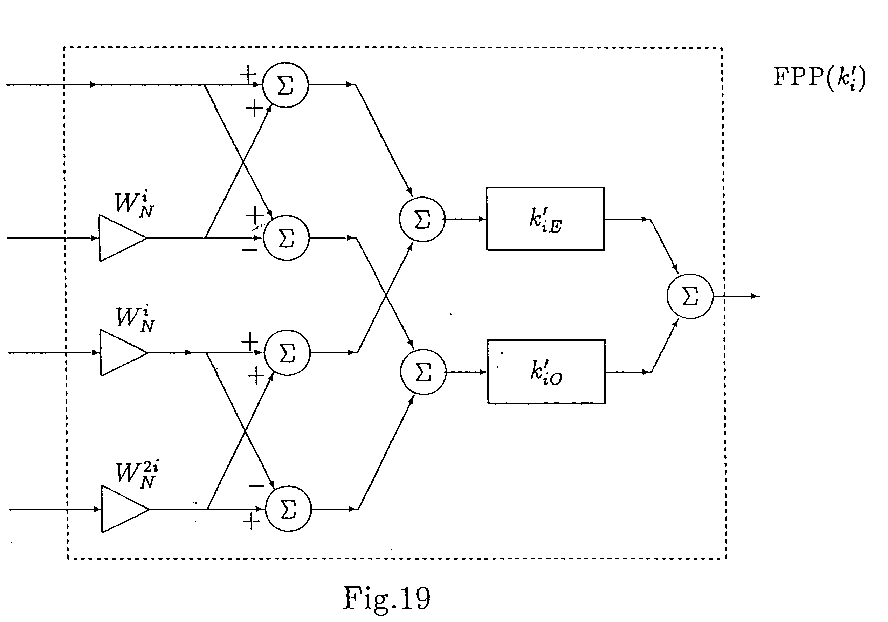

Moreover in virtue of the near similarity of the units $FP(k'_i)$ and of the units $FP(k''_i)$ of both polyphase networks and of the orthogonal characteristics of the signals OFDM, it is possible, through the same block simplification procedure already applied for the definition of the two distinct block arrangements FP of the two polyphase networks, to sum up the two FP units as schematized in Fig. 18, achieving in this way the definition of a new complex unit $FPP(k_i')$ with the structure illustrated in Fig. 19. Even in this case we obtain a halving of the computational complexity.

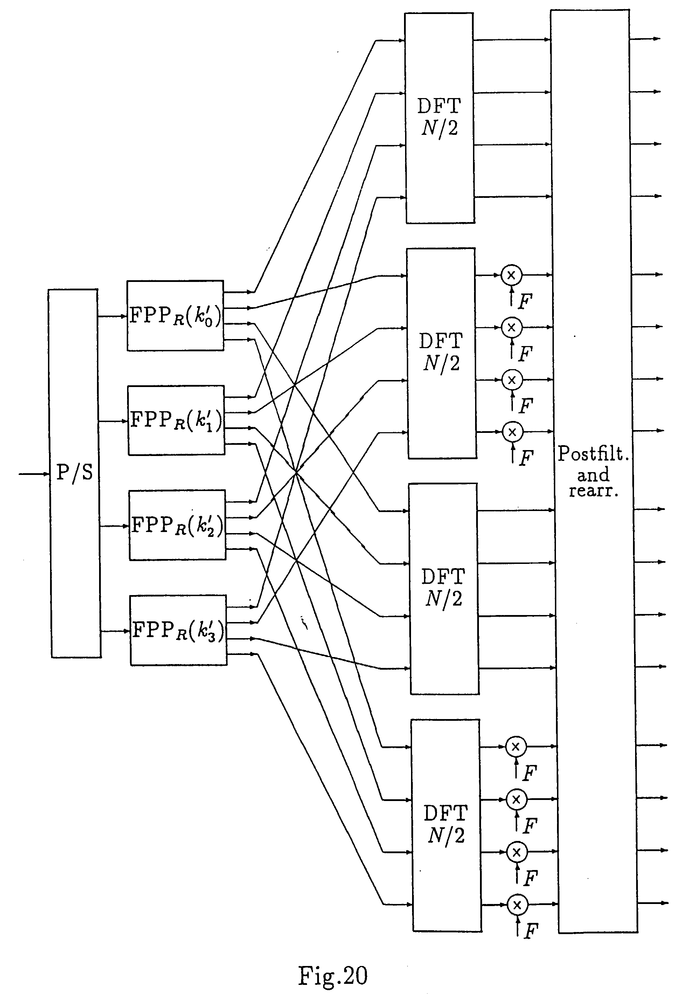

The multiplication by the constant $W_N^{2i}$ of each complex unit $FPP(k_i)$ can be transferred before the processor (IDFT) by a reordering of the input flows. For the specular conditions the final block scheme of the demodulator with fractioned outputs of a receiver is schematically shown by Fig. 20. Naturally in this case the function of multiplication by constant is transferred after the corresponding processor DFT.

<u>Application to an OFDM-NPS system (without Pulse Shaping)</u>

An OFDM-NPS system is composed by an SCS whose reference filter is a rectangular pulse:

$$h(nT_0) = \begin{cases} h_0 & n=0...N-1 \\ 0 & otherwise \end{cases}$$

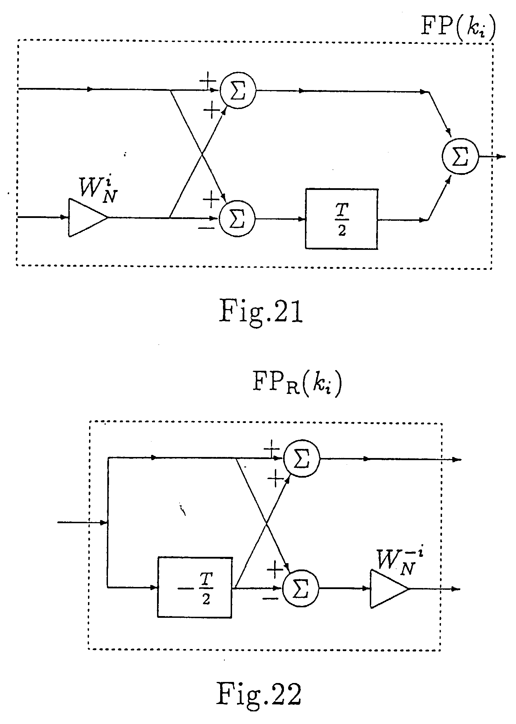

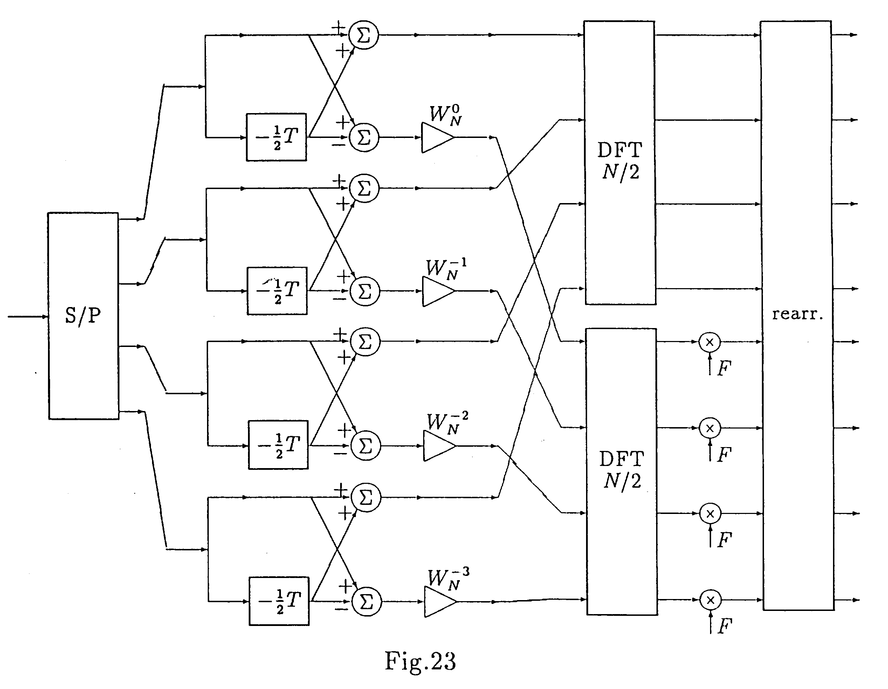

In this case the polyphase filters may be replaced by a simple multiplication by a constant. In particular the units $FP(k_i)$ become simpler, as way indicated in Fig. 21 and 22, for the case of the transmitter and for the case of the receiver respectively. The scheme of a filterless demodulator with fractioned outputs realized according to the present invention is shown in Fig. 23.

<u>Extension to a subdivision by T/4</u>

The fractioning and resynthesis method of the invention makes it possible to define a demodulator with fractioned outputs even with fractioning periods of the output flows inferior to T/2 of the examples illustrated until now.

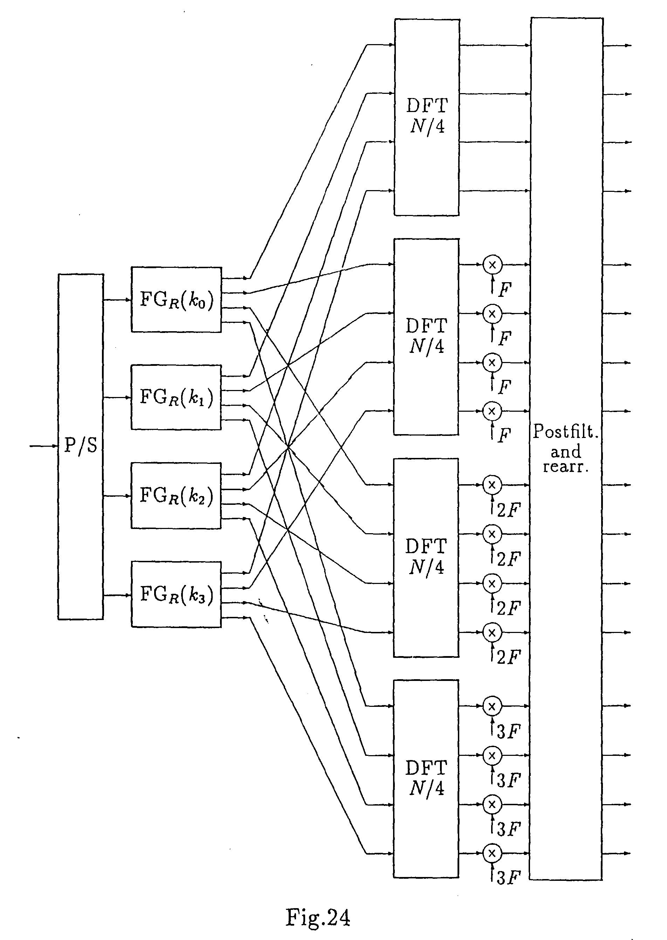

The scheme of Fig. 24 shows the synthesis of a demodulator with T/4 fractionally spaced outputs. In this case the original unit SCS with N branches turns out to be virtually subdivided in four SCSs with N/4 branches which, according to an efficient implementation comprises the use of four distinct processors with N/4 branches. Even in this case the arrangement in groups of the output flows from the complex units $FG(k_i)$ (which in this case are in a number of four per block) makes it possible to transfer the multiplication function per constant after of the respective processor DFT.

**Bibliography:**

[1] B. Hirosaki, "An Orthogonally Multiplexed QAM System using Discrete Fourier Transform", IEEE Trans. on Communications, COM-29, No. 7, July 1981.

[2] B. Hirosaki, "An Analysis of Automatic Equalizers for Orthogonally Multiplexed QAM Systems", IEEE Trans. on Communications, COM-28, no. 1, pp 73-83, January 1980.

[3] G. Cariolaro, G. Michieletto, L. Vangelista, "A Comparison between two OFDM Modulation Systems for Digital Terrestrial Television Broadcasting", HDTV '93 Proceedings, session 4B.

[4] G. Cariolaro, "An OFDM Scheme with Half Complexity", GLOBECOM '94 Conference Proceedings.

**Claims**

1. Method for the synthesis of a receiver for orthogonal frequency division multiplexing (OFDM) transmission systems suitable to generate a plurality of output data flows with a multiple bit rate equal to $2^k$ times the symbol rate F of the system, where k is a whole number, flows that are individually equalized through an equalizers advantageously operating at a sampling rate $2^k$ times higher than said symbol rate F of the system, maintaining said demodulator conform to a Standard Complex Scheme of the receiver ($SCS_R$), characterized in that it provides for the execution of the following steps:

   to consider an $SCS_R$ architecture with N output flows composed according to a theoretic inefficient scheme, of:

   i) one node which produces N repetitions of the flow at symbol rate $F_0=NF$ to be demodulated;
   ii) one bank of different modulators with equally spaced frequencies from 0 to (N-1)F;
   iii) one bank of identical N filters sampled at said symbol rate F;

   to process again said architecture by splitting said filter bank into two banks in which the first is sampled to said bit rate $2^kF$ and supplies a second filter bank which restores the original flows in output to the $SCS_R$;
   to arrange said N modulators and relative first filters in $2^k$ groups, each group having graduated carrier modulators of a constant frequency interval $2^kF$, a first group being composed by flows in output from said first filters having relative modulators with multiple frequency of $2^kF$ from 0 to $(N/2^k-1)2^kF$, and therefore intrinsically in conformity to an $SCS_R$ scheme, each one of the other groups being composed by the flows in output from said first filters having modulators with the same frequency offset with respect to said first group;
   to compensate the respective frequency offset not null of the $N/2^k$ flows of each one of the $2^k$-1 groups carrying part of the modulation operation after the said first filters, so as to restore as a whole a conformity for groups with $2^k$ $SCS_R$ schemes, having each one the bit rate $2^kF$;
   to filter the flows compensated by the frequency offset through said second bank of substantially not sampled filters;

to rearrange the filtered flows in the inverted way to the ordering previously introduced to obtain $2^k$ groups of $N/2^k$ flows in conformity with $SCS_R$ schemes.

2. Method as defined by claim 1, in which said transmission system is a transmission system with orthogonal frequency division multiplexing without pulse shaping (OFDM-NPS), characterized in that said filtering operation is carried out by the use of said second bank of filters composed by a number N of computationally insignificant unitary multipliers.

3. Method as defined by claim 1 in which said transmission system is a transmission system with orthogonal frequency division multiplexing with pulse shaping (OFDM-PS), characterized in that said filtering operation is carried out by the use of said second bank of filters composed by a number N of identical filter sections (F(f)) and suitable to carry out a computationally significant filtering of the input flows.

4. Method as defined by claim 2 or 3, characterized in that it provides for the use of an efficient architecture for each one of the $2^k$ $SCS_R$ schemes.

5. Demodulation system for a receiver for transmission systems with orthogonal frequency division multiplexing (OFDM) suitable to generate a plurality of output data flows with a multiple bit rate equal to $2^k$ times the symbol rate F of the system, where k is a whole number, suitable to be individually equalized by means of an equalizer which operates advantageously at a sampling rate $2^k$ times higher than said symbol rate F of the system maintaining said demodulator in conformity with a Standard Complex Scheme of the receiver ($SCS_R$), characterized in that it includes:

serial/parallel conversion means (S/P) suitable to produce $N/2^k$ output flows with a bit rate equal to $2^k$ times the symbol rate F of the system;
filter units (FP($k_i$)) obtained by merging corresponding components of the polyphase networks present in the efficient realization of the $2^k$ $SCS_R$ schemes, and where each one of said filter units is suitable to receive through an input one of said output flows of said serial/parallel (S/P) conversion means and to produce each one $2^k$ output flows with the bit rate $2^k F$;
$2^k$ processors (DFT) working at said bit rate $2^k F$, each one of the dimension $N/2^k$, the $N/2^k$ inputs of which are respectively connected to the outputs of said filter units (FP($k_i$)), so that the output flows of each one of said processors will be associated to graduated carrier frequencies of a constant interval of a frequency equal to $2^k$ times the symbol rate F of the system;
modulation means connected to the outputs of said processors (DFT), the carrier'frequencies associated to the $2^k$ flows in output at the processors (DFT) having a frequency offset with respect to the $2^k$ output flows at a first processor (DFT) having a null frequency offset, suitable to subtract the respective frequency offset to restore a conformity to an $SCS_R$ scheme of all output flow groups at said $2^k$ processors (DFT);
filter means suitable to reconstruct N representative flows of the input data at the transmitter.

6. System according to claim 5, characterized in that said filtering means are implemented by means of equalizers operating at a bit rate $2^k F$.

7. System according to claim 5, characterized in that said filtering means are implemented by means of said second identical filter sections followed by equalization means which operate at a bit rate $2^k F$.

8. System according to claim 5, characterized in that between said modulation means and said filtering means, flow arrangement means are inserted, which are suitable to carry out an inversion of the previously introduced ordering and obtaining $2^k$ groups of $N/2^k$ flows in conformity with $SCS_R$ schemes.

9. System according to claim 6 or 7, characterized in that between said modulation means and said filtering means, flow arrangement means are inserted, which are suitable to carry out an inversion of the previously introduced ordering and obtaining $2^k$ groups of $N/2^k$ flows which are in conformity with $SCS_R$ schemes.

Fig.1

11

Fig.2

EP 0 719 005 A2

EP 0 719 005 A2

$N$ branch PPN

$$H_0(f)$$

$$S_n(t) \qquad N \text{ size} \qquad s_n(t) \qquad H_n(f) \qquad v_n(t) \qquad P/S \qquad v(t_0)$$

$$T \qquad \text{IDFT} \qquad T \qquad \qquad T \qquad \qquad T_0$$

$$H_{N-1}(f)$$

Fig.3

Fig.4

EP 0 719 005 A2

Fig.5

A            B

Fig.6

Fig.7

$T_0$

$\Sigma$

P/S

P/S

$\frac{1}{2}N$
branches
$\mathcal{P}(K)$

$\frac{1}{2}N$
branches
$\mathcal{P}(K')$

$\frac{1}{2}N$
points
IDFT

$\frac{1}{2}N$
points
IDFT

$\frac{1}{2}T$

Fig.8

Fig.9

Fig.10

Fig.11

Fig.12

$\mathrm{FP_R}(k_i)$

Fig.13

transmitter

$c_0(t)$     $x_0(t)$

$c_k(t)$     pre-process.     $x_k(t)$     SCS     $v(t_0)$     $Re[]$     $\tilde{v}(t_0)$     channel

$c_{N-1}(t)$     $x_{N-1}(t)$

$2T$     $T$     $T_0$     $T_0$

EP 0 719 005 A2

Fig.14ə

Fig.14 b

EP 0 719 005 A2

Fig.15

$c_n$
$n$ even

| $DS(0)$ | $\rightarrow$ | P&O $f_0$ | $\rightarrow$ | $N$ size SCS $H'(f)$ $F$ |

$c_n$
$n$ odd

| $DS(1)$ | $\rightarrow$ | P&O $f_1$ | $\rightarrow$ | $N$ size SCS $H''(f)$ $F$ |

$\Sigma$ $\quad v(t_0)$

Fig.16

$\text{FP}(k_0')$

$\text{FP}(k_1')$

$\text{FP}(k_2')$

$\text{FP}(k_3')$

$\text{FP}(k_0'')$

$\text{FP}(k_1'')$

$\text{FP}(k_2'')$

$\text{FP}(k_3'')$

$\Sigma$

$\Sigma$

$\Sigma$

$\Sigma$

P/S

Fig.17

Fig.18

Fig.19

EP 0 719 005 A2

Fig.20

$\mathrm{FP}(k_i)$

Fig.21

$\mathrm{FP_R}(k_i)$

Fig.22

Fig.23

Fig.24